(19) 

Europäisches Patentamt
European Patent Office
Office européen des brevets

(11) **EP 4 092 591 A1**

(12) **EUROPEAN PATENT APPLICATION**
published in accordance with Art. 153(4) EPC

(43) Date of publication:
**23.11.2022 Bulletin 2022/47**

(21) Application number: **20913216.6**

(22) Date of filing: **11.12.2020**

(51) International Patent Classification (IPC):
***G06Q 10/08*** (2012.01)

(52) Cooperative Patent Classification (CPC):
**G06Q 10/08; Y02P 90/30**

(86) International application number:
**PCT/JP2020/046427**

(87) International publication number:
**WO 2021/145115 (22.07.2021 Gazette 2021/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2020 JP 2020004599**

(71) Applicant: **JFE Steel Corporation
Tokyo 100-0011 (JP)**

(72) Inventors:
• **NAKATSUJI, Kazuhiro
Tokyo 100-0011 (JP)**
• **YAMAGUCHI, Osamu
Tokyo 100-0011 (JP)**

(74) Representative: **Grünecker Patent- und
Rechtsanwälte
PartG mbB
Leopoldstraße 4
80802 München (DE)**

(54) **DELIVERY PLAN GENERATION METHOD, OPERATION METHOD AND DELIVERY PLAN GENERATION DEVICE**

(57) Techniques relating to delivery plan generation are improved. A delivery plan generation method comprises: generating a plurality of delivery patterns (S110); narrowing the plurality of delivery patterns down to a designated number of delivery patterns, based on a plurality of solutions calculated as a result of inputting the plurality of delivery patterns to an annealing machine (30) (S120); and generating a delivery plan based on delivery patterns selected from the designated number of delivery patterns (S130).

*FIG. 2*

**Description**

CROSS REFERENCE TO RELATED APPLICATION

This application claims priority to and the benefit of Japanese Patent Application No. 2020-004599 filed on January 15, 2020, the entire disclosure of which is incorporated herein by reference.

TECHNICAL FIELD

The present disclosure relates to a delivery plan generation method, an operation method, and a delivery plan generation device using an annealing machine.

BACKGROUND

There are conventional methods of optimizing article delivery plans by transportation equipment such as trucks and ships. An example of such conventional methods is a method of firstly listing combinations of delivery patterns with predetermined delivery routes, loading and unloading, and schedules and secondly selecting, from these combinations, a plurality of delivery patterns that satisfy delivery-related constraints and whose evaluation index such as cost is minimum or maximum. However, in the case where there are a large number of delivery routes and cargoes, the total number of combinations of delivery patterns becomes enormous, and it is difficult to select an appropriate combination of delivery patterns from these combinations within realistic time.

CITATION LIST

Patent Literature

PTL 1: WO 2018/079443 A1

Non-patent Literature

NPL 1: Yuuichirou Kaku and four others, "Optimize Vehicle Routing Problem Simultaneous Delivery and Pick-up to Reduce Logistics Costs", Information Processing Society of Japan, 2012

SUMMARY

(Technical Problem)

As techniques of selecting appropriate delivery patterns from delivery pattern candidates, optimization methods such as branch and bound method and metaheuristic are proposed. However, when the number of delivery pattern candidates is enormous, the calculation time required for optimization increases exponentially, and these methods are not practical. NPL 1 proposes a method whereby calculation is performed from a reasonable number of delivery pattern candidates and, based on the calculation results, delivery patterns that are expected to provide improvement are added and recalculation is performed. This, however, requires repeated optimization calculation, and therefore causes an increase in calculation time. PTL 1 proposes a method whereby a problem is divided for each delivery area beforehand and calculation is performed in actual time. However, a plan for a delivery route that extends over delivery areas cannot be made, and there is a possibility that a plan which is not totally optimized is output. There is also a method whereby a developer of an algorithm understands a problem structure and implements a rule of narrowing delivery patterns down to an appropriate number of delivery patterns. This, however, relies on the developer's skill, and also prolongs the development period.

It is therefore an object of this disclosure to improve techniques relating to delivery plan generation.

(Solution to Problem)

A delivery plan generation method according to one of the disclosed embodiments comprises: generating a plurality of delivery patterns; narrowing the plurality of delivery patterns down to a designated number of delivery patterns, based on a plurality of solutions calculated as a result of inputting the plurality of delivery patterns to an annealing machine; and generating a delivery plan based on delivery patterns selected from the designated number of delivery patterns.

An operation method according to one of the disclosed embodiments comprises performing operation using a delivery plan generated by the above-described delivery plan generation method.

A delivery plan generation device according to one of the disclosed embodiments is a delivery plan generation device configured to generate a delivery plan, and comprises a controller configured to: generate a plurality of delivery patterns; narrow the plurality of delivery patterns down to a designated number of delivery patterns, based on a plurality of solutions calculated as a result of inputting the plurality of delivery patterns to an annealing machine; and generate a delivery plan based on delivery patterns selected from the designated number of delivery patterns.

(Advantageous Effect)

It is thus possible to improve techniques relating to delivery plan generation.

BRIEF DESCRIPTION OF THE DRAWINGS

In the accompanying drawings:

FIG. 1 is a block diagram illustrating the structure of a system according to one of the disclosed embodiments;
FIG. 2 is a flowchart illustrating a delivery plan generation method according to one of the disclosed embodiments;
FIG. 3 is a diagram schematically illustrating a process by a delivery plan generation device according to one of the disclosed embodiments;
FIG. 4 is a diagram schematically illustrating a process of narrowing delivery patterns by the delivery plan generation device according to one of the disclosed embodiments; and
FIG. 5 is a diagram illustrating results of comparison between the delivery plan generation device according to one of the disclosed embodiments and a comparative example.

DETAILED DESCRIPTION

A system 10 that implements a delivery plan generation method according to one of the disclosed embodiments will be described below, with reference to the drawings.

In the drawings, the same or corresponding parts are given the same reference signs. In the following description of this embodiment, the description of the same or corresponding parts is omitted or simplified as appropriate.

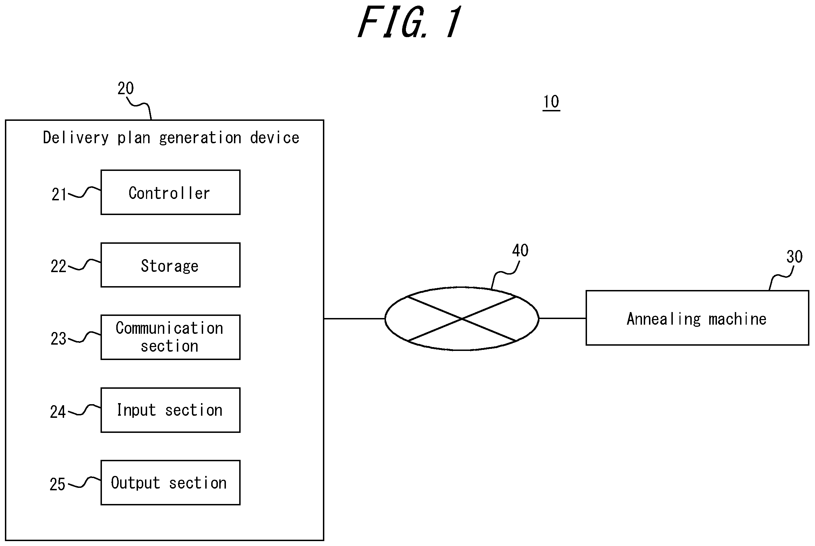

The structure of the system 10 according to this embodiment will be described below, with reference to FIG. 1.

The system 10 according to this embodiment includes a delivery plan generation device 20 and an annealing machine 30. The delivery plan generation device 20 is a general-purpose computer, and can communicate with the annealing machine 30 via a network 40. The network 40 includes the Internet, an ad hoc network, a local area network (LAN), or a metropolitan area network (MAN). The network 40 includes a cellular network, a wireless personal area network (WPAN), or a public switched telephone network (PSTN). The network 40 includes a terrestrial wireless network, an optical network, or other networks. The network 40 includes any combination of these networks. The components of the wireless network include, for example, an access point (for example, a Wi-Fi access point) and a femtocell.

The delivery plan generation device 20 includes a controller 21, a storage 22, a communication section 23, an input section 24, and an output section 25.

The controller 21 includes at least one processor, at least one dedicated circuit, or a combination thereof. Examples of the processor include a general-purpose processor such as a central processing unit (CPU) or a graphics processing unit (GPU), or a dedicated processor specialized in a specific process. Examples of the dedicated circuit include a field-programmable gate array (FPGA) and an application specific integrated circuit (ASIC). The controller 21 executes a process relating to the operation of the delivery plan generation device 20 while controlling each component in the delivery plan generation device 20.

The storage 22 includes at least one semiconductor memory, at least one magnetic memory, at least one optical memory, or a combination of two or more thereof. Examples of the semiconductor memory include a random access memory (RAM) and a read only memory (ROM). The RAM is, for example, a static random access memory (SRAM) or a dynamic random access memory (DRAM). The ROM is, for example, an electrically erasable programmable read only memory (EEPROM). For example, the storage 22 functions as a main storage device, an auxiliary storage device, or a cache memory. The storage 22 stores data used for the operation of the delivery plan generation device 20 and data obtained as a result of the operation of the delivery plan generation device 20.

The communication section 23 includes at least one communication interface. Examples of the communication interface include a LAN interface, a WAN interface, an interface that complies with a mobile communication standard such as Long Term Evolution (LTE), 4G (4th generation), or 5G (5th generation), and an interface that complies with short-range wireless communication such as Bluetooth® (Bluetooth is a registered trademark in Japan, other countries, or both). The communication section 23 receives data used for the operation of the delivery plan generation device 20, and transmits data obtained as a result of the operation of the delivery plan generation device 20.

The input section 24 includes at least one input interface. Examples of the input interface include a physical key, a capacitive key, a pointing device, a touch screen integrated with a display, and a microphone. The input section 24 receives an operation of inputting data used for the operation of the delivery plan generation device 20. The input section 24 may be connected to the delivery plan generation device 20 as an external input device, instead of being included in the delivery plan generation device 20. As a connection method, any method such as Universal Serial Bus (USB), High-Definition Multimedia Interface (HDMI® (HDMI is a registered trademark in Japan, other countries, or both)), or Bluetooth® may be used.

The output section 25 includes at least one output interface. Examples of the output interface include a display and a speaker. The display is, for example, a liquid crystal display (LCD) or an organic electroluminescent (EL) display. The output section 25 outputs data obtained as a result of the operation of the delivery plan generation device 20. The output section 25 may be connected to the delivery plan generation device 20 as an external output device, instead of being included in the delivery plan generation device 20. As a connection method, any method such as USB, HDMI®, or Bluetooth® may be used.

The functions of the delivery plan generation device 20 are implemented by a program according to this embodiment being executed by a processor corresponding to the controller 21. That is, the functions of the delivery plan generation device 20 are implemented by software. The program causes a computer to execute the operation of the delivery plan generation device 20, thus causing the computer to function as the delivery plan generation device 20. In other words, the computer executes the operation of the delivery plan generation device 20 according to the program to thus function as the delivery plan generation device 20.

In this embodiment, the program can be recorded in a computer-readable recording medium. The computer-readable recording medium includes a non-transitory computer-readable medium, such as a magnetic recording device, an optical disc, a magneto-optical recording medium, or a semiconductor memory. The program is distributed, for example, by selling, transferring, or renting a portable recording medium. The portable recording medium is, for example, a digital versatile disc (DVD) or a compact disc read only memory (CD-ROM) having the program recorded therein. The program may be distributed by storing the program in a storage of a server and transmitting the program from the server to another computer. The program may be provided as a program product.

In this embodiment, for example, the computer once stores, in the main storage device, the program recorded in the portable recording medium or the program transmitted from the server, and then reads the program stored in the main storage device by the processor and executes a process according to the read program by the processor. The computer may read the program directly from the portable recording medium and execute the process according to the program. Each time the computer receives the program from the server, the computer may execute the process according to the received program. Without the program being transmitted from the server to the computer, the process may be executed by application service provider (ASP) services that implement the functions by only execution instruction and result acquisition. The program includes information that is to be processed by an electronic computer and equivalent to a program. For example, data that is not a direct command to the computer but has the property of defining a process of the computer is "equivalent to a program".

All or part of the functions of the delivery plan generation device 20 may be implemented by a dedicated circuit corresponding to the controller 21. That is, all or part of the functions of the delivery plan generation device 20 may be implemented by hardware.

In the system 10 according to this embodiment, the delivery plan generation device 20 generates an article delivery plan by transportation equipment using the annealing machine 30. Table 1 is an example of a delivery plan generated by the delivery plan generation device 20.

[Table 1]

| Transportation equipment ID | Loading place ID | Unloading place ID | Article 1 ID (tonnage) | Article 2 ID (tonnage) | Delivery start time | Delivery finish time |
|---|---|---|---|---|---|---|
| C-5 | Loading port 5 | Unloading port 2 | 322 (xxx tons) | 4455 (zzz tons) | YY/MM/DD | YY/MM/DD |
| B-6 | Loading port 4 | Unloading port 1 | 1123 (yyy tons) | - | YY/MM/DD | YY/MM/DD |
| ... | ... | ... | ... | ... | ... | ... |

In the example in Table 1, the delivery plan includes information for identifying transportation equipment used (transportation equipment ID) and information for identifying a loading place (loading place ID). The delivery plan also includes information for identifying the type and quantity of each article (article 1 ID, article 2 ID, and respective tonnage), information for identifying the delivery start time, and information for identifying the delivery finish time. In other words, the system 10 according to this embodiment generates a delivery plan for delivering a type of article in a predetermined quantity from a loading place to an unloading place using transportation equipment.

In the delivery plan generation method according to this embodiment, first, a plurality of candidate delivery patterns that can be employed in a delivery plan are listed, to generate a delivery pattern candidate list (hereafter also referred to as "delivery pattern list"). Table 2 is an example of the delivery pattern list.

[Table 2]

| Pattern ID | Transportation equipment ID | Loading place ID | Unloading place ID | Article 1 ID (tonnage) | Article 2 ID (tonnage) | Delivery start time | Delivery finish time |
|---|---|---|---|---|---|---|---|
| 1 | A-1 | Loading port 1 | Unloading port 2 | 112 (xxx tons) | 222 (zzz tons) | YY/MM/DD | YY/MM/DD |
| 2 | B-2 | Loading port 2 | Unloading port 2 | 134 (yyy tons) | - | YY/MM/DD | YY/MM/DD |
| ... | ... | ... | ... | ... | ... | ... | ... |

In the example in Table 2, the delivery pattern list includes information for identifying a delivery pattern (pattern ID), information for identifying transportation equipment used (transportation equipment ID), and information for identifying a loading place (loading place ID). The delivery pattern list also includes information for identifying the type and quantity of each article (article 1 ID, article 2 ID, and respective tonnage), information of the delivery start time, and information of the delivery finish time. In the delivery plan generation method according to this embodiment, appropriate delivery patterns are selected from the delivery pattern list by optimization calculation or the like. The set of the selected delivery patterns is a delivery plan. In the optimization calculation, a combination of delivery patterns that satisfies supply and demand constraints and transportation equipment constraints and minimizes (maximizes) an evaluation index such as cost is calculated. In the example in Table 1 and Table 2, the number of loading places and the number of unloading places are each one, but the delivery plan generation method according to this embodiment is equally applicable in the case where there are a plurality of loading places and there are a plurality of unloading places.

Suppose the parameters of each delivery pattern have the respective degrees of freedom in Table 3. Then, the total number of combinations is approximately 1,360,000. In the case where there are such a large number of combinations, it is not practical to find an optimum solution only by optimization calculation because the calculation time is enormous.

[Table 3]

| Item | Transportation equipment | Loading place | Unloading place | Article | Desired delivery time period |
|---|---|---|---|---|---|
| Degree of freedom | 10 | 13 | 5 | 70 | 30 |

In view of this, in the delivery plan generation method according to this embodiment, the annealing machine 30 performs a process of narrowing delivery pattern candidates beforehand. The annealing machine 30 is a calculator specialized in optimization calculation, and stochastically calculates a variable that minimizes or maximizes an objective function having, as an argument, a variable implemented by qubits. Methods of the annealing machine 30 include a digital method and a method using a quantum effect, and any of these methods may be used in this embodiment. The annealing machine 30 is capable of optimization calculation faster than a typically used general-purpose computer. Here, the object to be solved by the annealing machine 30 needs to be formulated into an Ising model defined in Formula (1).

$$\min \sum_{i,j\ (i \geq j)} Q_{ij} x_i x_j \qquad \ldots (1).$$

The annealing machine 30 performs calculation so as to minimize the value of Formula 1, and outputs the resultant x which is a solution. Q is a coefficient matrix, and is calculated based on information of input data, constraint conditions, and an evaluation index. $x_p$ (p = 1, 2, ..., i, ... P) is a binary variable. Although minimization is used as an example in Formula (1), maximization can be equally used by plus/minus inversion of the value of coefficient matrix Q. Here, the annealing machine 30 calculates the constraint conditions as a penalty, as part of the evaluation function. Accordingly, the solution output from the annealing machine 30 does not necessarily satisfy the constraint conditions. Hence, in the delivery plan generation method according to this embodiment, first the annealing machine 30 narrows delivery pattern candidates, and then the delivery plan generation device 20 which is a general-purpose computer selects, from the narrowed delivery patterns, delivery patterns that satisfy the constraint conditions by an optimization method to generate a delivery plan.

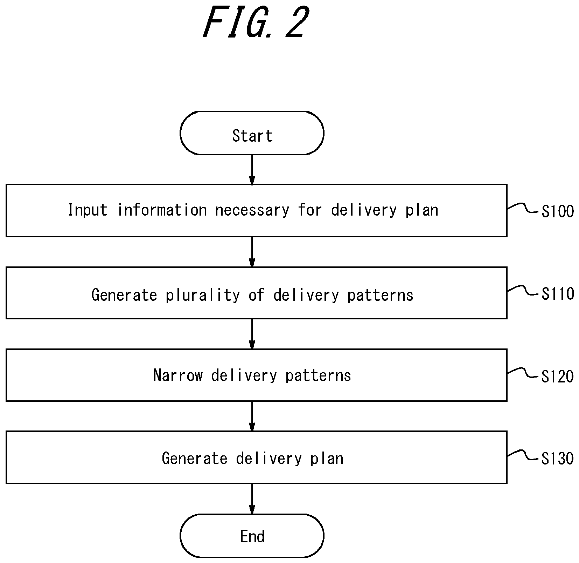

The delivery plan generation method by the system 10 according to this embodiment will be described below, with reference to a flowchart in FIG. 2.

First, the input section 24 in the delivery plan generation device 20 receives input of information necessary for a delivery plan (step S100). The information necessary for a delivery plan includes plan information, constraint information, and an evaluation index. The plan information includes, for example, information of available transportation equipment and deliverable unloading places and loading places, transportation equipment use cost, and loadable weight capacity. Table 4 to Table 7 indicate an example of plan information. Table 4 indicates information of available transportation equipment.

[Table 4]

| Transportation equipment | Deliverable loading place | Deliverable unloading place | Loadable weight capacity (tonnage) | Use cost (yen/hr) |
|---|---|---|---|---|
| A-1 | Loading ports 1,2,3,4,7,8... | Unloading ports 1,2,3... | aaa | xxxxx |
| B-2 | Loading ports 1,2,3,4,6.9... | Unloading ports 1,2,4... | bbb | yyyyy |
| ... | ... | ... | ... | ... |

Table 5 indicates loading place information and loadable article information.

[Table 5]

| Loading place | Article |
|---|---|
| Loading port 1 | 1,30,60,111,112,222... |
| Loading port 2 | 4,32,231,134,... |
| ... | ... |

Table 6 indicates unloading place information, needed article information and weight, and desired delivery time period information.

[Table 6]

| Unloading place | Article | Weight (tonnage) | Beginning of desired time period | End of desired time period |
|---|---|---|---|---|
| Unloading port 1 | 111, | yy | YY/MM/DD | YY/MM/DD |
| Unloading port 1 | 222 | zz | YY/MM/DD | YY/MM/DD |
| Unloading port 2 | 134 | xx | YY/MM/DD | YY/MM/DD |
| Unloading port 2 | 54 | rr | YY/MM/DD | YY/MM/DD |
| ... | ... | ... | ... | ... |

Table 7 indicates deliverable route (loading place and unloading place) information and required time information.

[Table 7]

| Loading place | Unloading place | Required time (hr) |
|---|---|---|
| Loading port 1 | Unloading port 1 | hh |
| Loading port 1 | Unloading port 2 | hh |
| ... | ... | ... |
| Loading port 2 | Unloading port 1 | hh |
| Loading port 2 | Unloading port 2 | hh |
| ... | ... | ... |

The constraint information is information about the constraint conditions that need to be satisfied by the delivery plan, and includes, for example, the following constraint conditions 1 to 4:

- Constraint condition 1: transportation equipment cannot be used simultaneously.
- Constraint condition 2: transportation equipment cannot deliver an article of a predetermined weight or more at one time.
- Constraint condition 3: there are non-unloadable places and non-loadable places depending on transportation equipment.
- Constraint condition 4: a needed article is delivered to an unloading place in a desired delivery time period.

The evaluation index is an index for evaluating a generated delivery plan. For example, the evaluation index is minimization of delivery cost. In this case, a delivery plan with a lower delivery cost is evaluated more highly.

After the information necessary for a delivery plan is input, the controller 21 in the delivery plan generation device 20 generates a plurality of delivery patterns based on the input information (step S110). The controller 21 determines constraints that can be considered in units of delivery patterns beforehand, and generates only delivery patterns satisfying such constraints. The constraints that can be considered in units of delivery patterns are, for example, constraint conditions 2 and 3. The controller 21 also calculates the delivery cost of each delivery pattern. For example, the controller 21 calculates the delivery cost based on the use cost of transportation equipment per unit time and the required time for each route .

The controller 21 then inputs the generated plurality of delivery patterns to the annealing machine 30 to calculate a plurality of solutions, and, based on the calculated solutions, narrows the plurality of delivery patterns down to a designated number of delivery patterns (step S120).

Specifically, the controller 21 generates Formula (1) based on the input information and the delivery pattern information, and transmits input data to the annealing machine 30. Variable $x_i$ in Formula (1) is a variable that takes a value of 1 to indicate selecting the ith delivery pattern and takes a value of 0 to indicate not selecting the ith delivery pattern. The annealing machine 30 calculates the value of variable $x_i$ so as to minimize the value of Formula (1). Coefficient matrix Q in Formula (1) is the sum of coefficient matrixes representing the evaluation index and the constraint information by Formula (1). For example, the constraint that transportation equipment cannot be used simultaneously (constraint condition 1) is represented by a coefficient matrix in Formula (2). In the case where the evaluation index is the delivery cost, the delivery cost is represented by a coefficient matrix in Formula (3).

$$QA_{ij} = \begin{cases} 1: \text{when delivery periods of ith and jth delivery patterns overlap} \\ 0: \text{otherwise} \end{cases} \quad \dots (2).$$

$$QC_{ij} = \begin{cases} 1: i = j \\ 0: \text{otherwise} \end{cases} \quad \dots (3).$$

Regarding constraint condition 4, the constraint of delivering a needed article to an unloading place is represented by Formula (4). Developing Formula (4) and rearranging it by x yields Formula (5).

$$\min \sum_{c,p} \left( \sum_{i} s_{cpi} x_i - D_{cp} \right)^2 \dots (4)$$

$$QD_{ij} = \begin{cases} \sum_{c,p} (s_{cpi}^2 - 2s_{cpi}D_{cp}) & : i = j \\ \sum_{c,p} 2s_{cpi}s_{cpj} & : \text{otherwise} \end{cases} \dots (5).$$

In these formulas, $S_{cpi}$ represents the number of articles p delivered to unloading place c by delivery pattern i, and $D_{cp}$ represents the number of articles p needed in unloading place c. Adding Formulas (2), (3), and (5) together yields the following Formula (6).

$$Q_{ij} = w_1 QA_{ij} + w_2 QC_{ij} + w_3 QD_{ij} \quad \dots (6)$$

In Formula (6), $w_1$, $w_2$, and $w_3$ are coefficients. These coefficients are set to sufficiently large values to satisfy the constraints as much as possible. The purpose of this step is to narrow the delivery patterns. Therefore, there is no need to satisfy all constraints. Hence, to obtain various delivery pattern candidates, the value of at least one of $w_1$, $w_2$, and $w_3$ may be adjusted to a low value so as not to satisfy the constraints to a certain degree.

After generating Q in Formula (6), the controller 21 inputs Q to the annealing machine 30. The annealing machine 30 performs calculation so as to minimize the value of Formula (1), and outputs the resultant x which is a solution. The delivery plan generation device 20 receives the output plurality of solutions. Based on the plurality of solutions, the controller 21 narrows the plurality of delivery patterns down to the designated number of delivery patterns.

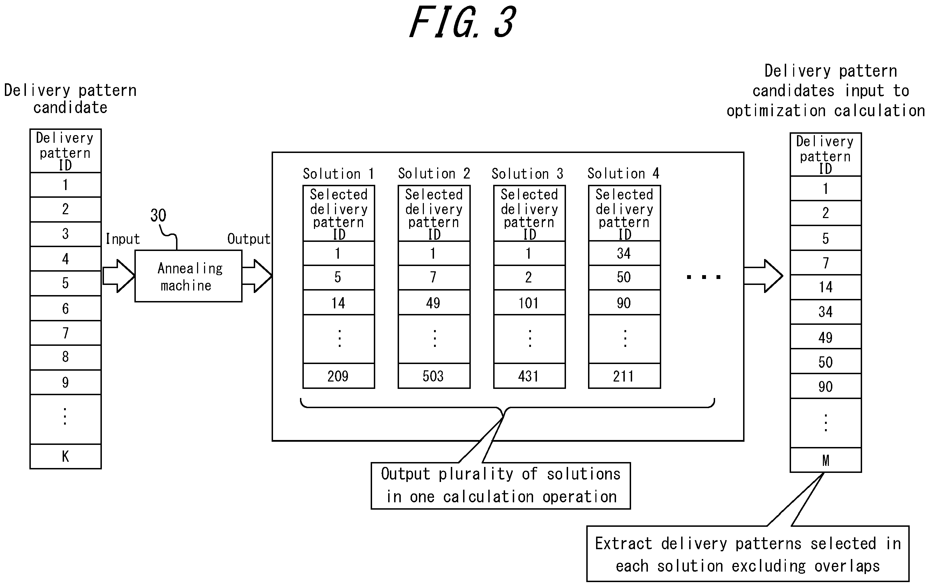

FIG. 3 is a conceptual diagram illustrating an example of narrowing delivery patterns using the annealing machine 30. As illustrated in FIG. 3, the annealing machine 30 outputs a plurality of solutions in one calculation operation. This makes it possible to obtain various solutions that takes similar values of Formula (1), and therefore is useful for appropriate delivery pattern narrowing. The controller 21 extracts all delivery patterns selected in the output solutions. In the case where selected delivery patterns overlap among the plurality of solutions, the plurality of solutions are narrowed down to the designated number of delivery patterns excluding such overlaps. In other words, the narrowed designated number of delivery patterns do not include two or more identical delivery patterns.

After narrowing the plurality of solutions down to the designated number of delivery patterns in step S120, the controller 21 in the delivery plan generation device 20 generates a delivery plan (step S130). Specifically, using the delivery pattern candidates narrowed by the annealing machine 30 as input, the controller 21 calculates a combination of delivery patterns satisfying the constraints by an optimization method. Examples of the optimization calculation method include a branch-and-bound-based solver, a constraint programming-based solver, and metaheuristic-based calculation.

Consider the case where the number of delivery patterns generated in step S110 exceeds the upper limit of the number of delivery patterns that can be input to the annealing machine 30. In such a case, in step S120, for example the controller 21 performs a process of inputting delivery patterns randomly selected from the plurality of delivery patterns to the annealing machine 30, a plurality of times. The number of delivery patterns selected is less than or equal to the number of delivery patterns that can be input to the annealing machine 30. The annealing machine 30 may then calculate solutions corresponding to each input, and narrowing may be performed based on the solutions. In detail, the controller 21 randomly selects different delivery pattern candidates from the delivery patterns generated in step S110. The controller 21 inputs the selected delivery patterns to the annealing machine 30 to calculate a plurality of solutions. The controller 21 performs this process a plurality of times while changing randomly selected delivery patterns each time. The delivery patterns are narrowed down to the designated number of delivery patterns based on the solutions output each time the process is performed. The number of delivery patterns resulting from narrowing by the annealing machine 30 may be set to greater than or equal to the designated number, and the controller 21 may further narrow the delivery patterns to the designated number of delivery patterns. Since the calculation by the annealing machine 30 is very fast, performing the calculation a plurality of times takes only a short calculation time. Thus, since the annealing machine 30 is capable of very fast calculation and is capable of outputting a plurality of different solutions in each calculation operation, the narrowing of the delivery patterns can be carried out by this process.

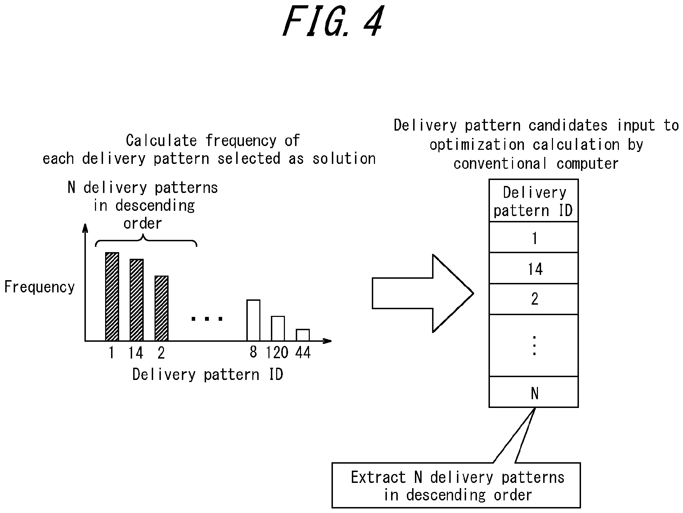

The above describes an example in which all delivery patterns selected in the plurality of solutions output from the annealing machine 30 are used in the calculation by the delivery plan generation device 20 in the next step S120, but the presently disclosed techniques are not limited to such. FIG. 4 is a diagram schematically illustrating a process in the case of further narrowing the delivery patterns used in the calculation by the delivery plan generation device 20. Based on the solutions output from the annealing machine 30, the frequency of selection as a solution is calculated for each delivery pattern. In detail, the controller 21 in the delivery plan generation device 20 calculates, for each delivery pattern, the frequency of the delivery pattern being included in the solutions, and determines the designated number of delivery patterns based on the order of frequency. As an example, the controller 21 may narrow the delivery patterns down to the designated number (N in FIG. 4) of delivery patterns in descending order of frequency. As another example, the controller 21 may determine delivery patterns each having a frequency greater than or equal to a threshold (for example, a frequency of 3 or more), as the designated number of delivery patterns.

EXAMPLES

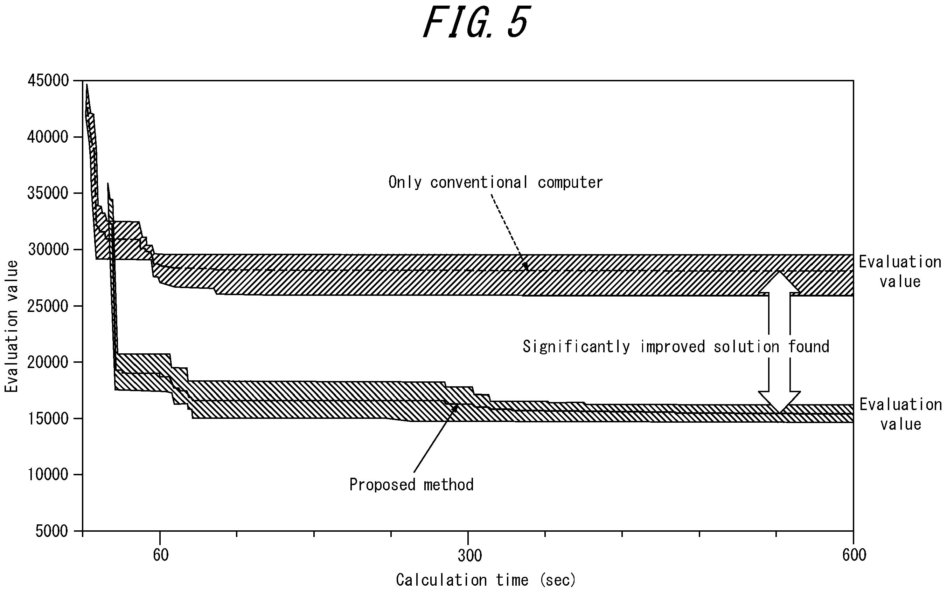

An example of generating a delivery plan for delivering raw material such as iron ore necessary for steelmaking from overseas using ships will be described below. In this example, a branch-and-bound-based solver was used as the optimization method by the delivery plan generation device 20. The annealing machine 30 performed calculation to select delivery patterns from randomly selected 1000 delivery pattern candidates. In a program used for verification, approximately 100 delivery patterns were selected. Then, approximately 1000 different solutions were obtained. The frequency of each delivery pattern was examined, and 200 delivery patterns in descending order of frequency were stored. This process was performed twenty times, and a total of 4000 delivery patterns were taken to be delivery pattern candidates to be input to the delivery plan generation device 20. The time taken to perform the process twenty times was approximately 20 seconds. The upper limit of the calculation time of optimization calculation in the delivery plan generation device 20 was set to 600 seconds, and the calculation was discontinued halfway. FIG. 5 illustrates the results of calculation under such conditions, where the vertical axis represents the evaluation value and the horizontal axis represents the calculation time. In FIG. 5, the solid line indicates the changes of the evaluation value by the proposed method. The dashed line indicates the result of calculation on 4000 randomly selected delivery patterns by an optimization method by a conventional computer. Verification was performed on ten cases. Each shaded area represents the distribution of the cases (the upper line of the shaded area being the maximum value of the cases, and the lower line of the shaded area being the minimum value of the cases). As illustrated in FIG. 5, by generating a delivery plan by the system 10 according to the present disclosure, a solution, i.e. a delivery plan, having a significantly improved evaluation value was able to be generated with the same calculation time.

Thus, the delivery plan generation method and the delivery plan generation device 20 in the system 10 according to the present disclosure narrow a large number of delivery patterns down to a designated number of delivery patterns using the annealing machine 30. The annealing machine 30 outputs a plurality of solutions in one calculation operation. This makes it possible to obtain various solutions that takes similar values of Formula (1), and therefore is useful for appropriate delivery pattern narrowing. The calculation of the plurality of solutions by the annealing machine 30 is fast, with the calculation time being on the order of microseconds to milliseconds. The calculation time when obtaining such various solutions by the conventional method is on the order of seconds to minutes. The delivery plan generation device 20 generates a delivery plan based on delivery patterns selected from the designated number of delivery patterns, so that a delivery plan having a high evaluation value can be generated in a short time. To narrow the delivery patterns down to the designated number of delivery patterns, it suffices to formulate the object to be solved into the Ising model defined in Formula (1) and repeatedly solve it by the annealing machine 30. The process is therefore versatile with no need for narrowing rules and knowledge. By performing operation using the delivery plan generated by the delivery plan generation method according to the present disclosure, operation according to a delivery plan with a high evaluation value (for example, operation at low delivery cost) can be achieved. The delivery plan generation method, the operation method, and the delivery plan generation device 20 in the system 10 according to the present disclosure can thus improve techniques relating to delivery plan generation.

While the presently disclosed techniques have been described by way of the drawings and embodiments, various changes and modifications may be easily made by those of ordinary skill in the art based on the present disclosure. Such changes and modifications are therefore included in the scope of the present disclosure. For example, the functions included in the components, steps, etc. may be rearranged without logical inconsistency, and a plurality of components, steps, etc. may be combined into one component, step, etc. and a component, step, etc. may be divided into a plurality of components, steps, etc.

REFERENCE SIGNS LIST

10      system
20      delivery plan generation device
21      controller
22      storage
23      communication section
24      input section
25      output section
30      annealing machine
40      network


**Claims**

1.  A delivery plan generation method comprising:

    generating a plurality of delivery patterns;
    narrowing the plurality of delivery patterns down to a designated number of delivery patterns, based on a plurality of solutions calculated as a result of inputting the plurality of delivery patterns to an annealing machine; and
    generating a delivery plan based on delivery patterns selected from the designated number of delivery patterns.

2.  The delivery plan generation method according to claim 1, wherein the narrowing includes performing a process of inputting delivery patterns randomly selected from the plurality of delivery patterns to the annealing machine, a plurality of times.

3.  The delivery plan generation method according to claim 1 or 2, wherein the narrowing includes calculating, for each delivery pattern, a frequency of the delivery pattern being included in the plurality of solutions, and determining the designated number of delivery patterns based on order of the frequency.

4.  The delivery plan generation method according to claim 1 or 2, wherein the narrowing includes calculating, for each delivery pattern, a frequency of the delivery pattern being included in the plurality of solutions, and determining delivery patterns each having a frequency greater than or equal to a threshold as the designated number of delivery patterns.

5.  An operation method comprising
    performing operation using a delivery plan generated by the delivery plan generation method according to any one of claims 1 to 4.

6.  A delivery plan generation device configured to generate a delivery plan, the delivery plan generation device comprising
    a controller configured to:

    generate a plurality of delivery patterns;
    narrow the plurality of delivery patterns down to a designated number of delivery patterns, based on a plurality of solutions calculated as a result of inputting the plurality of delivery patterns to an annealing machine; and
    generate a delivery plan based on delivery patterns selected from the designated number of delivery patterns.

# FIG. 1

EP 4 092 591 A1

# FIG. 2

```
        ┌──────────────┐
        │    Start     │
        └──────┬───────┘
               │
               ▼
┌─────────────────────────────────────────────┐
│  Input information necessary for delivery plan │ ～S100
└─────────────────────┬───────────────────────┘
                      │
                      ▼
┌─────────────────────────────────────────────┐
│     Generate plurality of delivery patterns    │ ～S110
└─────────────────────┬───────────────────────┘
                      │
                      ▼
┌─────────────────────────────────────────────┐
│          Narrow delivery patterns              │ ～S120
└─────────────────────┬───────────────────────┘
                      │
                      ▼
┌─────────────────────────────────────────────┐
│          Generate delivery plan                │ ～S130
└─────────────────────┬───────────────────────┘
                      │
                      ▼
              ┌──────────────┐
              │     End      │
              └──────────────┘
```

# FIG. 3

Delivery pattern
candidate

Delivery pattern
candidates input to
optimization calculation

| Delivery pattern ID |
|---|
| 1 |
| 2 |
| 3 |
| 4 |
| 5 |
| 6 |
| 7 |
| 8 |
| 9 |
| ⋮ |
| K |

Input → 30 → Annealing machine → Output →

| Solution 1 Selected delivery pattern ID | Solution 2 Selected delivery pattern ID | Solution 3 Selected delivery pattern ID | Solution 4 Selected delivery pattern ID |
|---|---|---|---|
| 1 | 1 | 1 | 34 |
| 5 | 7 | 2 | 50 |
| 14 | 49 | 101 | 90 |
| ⋮ | ⋮ | ⋮ | ⋮ |
| 209 | 503 | 431 | 211 |

· · ·

Output plurality of solutions
in one calculation operation

| Delivery pattern ID |
|---|
| 1 |
| 2 |
| 5 |
| 7 |
| 14 |
| 34 |
| 49 |
| 50 |
| 90 |
| ⋮ |
| M |

Extract delivery patterns selected in
each solution excluding overlaps

# FIG. 4

Calculate frequency of
each delivery pattern selected as solution

N delivery patterns
in descending
order

Frequency

1  14  2  . . .  8 120 44

Delivery pattern ID

Delivery pattern candidates input to
optimization calculation by
conventional computer

| Delivery pattern ID |
|---|
| 1 |
| 14 |
| 2 |
| ⋮ |
| N |

Extract N delivery patterns
in descending order

FIG. 5

<div align="center">

**INTERNATIONAL SEARCH REPORT**

</div>

| | International application No. |
|---|---|
| | PCT/JP2020/046427 |

**A. CLASSIFICATION OF SUBJECT MATTER**
Int.Cl. G06Q10/08(2012.01)i
FI: G06Q10/08300

According to International Patent Classification (IPC) or to both national classification and IPC

**B. FIELDS SEARCHED**

Minimum documentation searched (classification system followed by classification symbols)
Int.Cl. G06Q10/08

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A<br><br><br><br><br>A | 人見 勝人，入門編 生産システム工学，第 6 版，共立出版株式会社南條 光章, 10 December 2017, p. 101, ISBN 978-4-320-08218-2, p. 101, (HITOMI, Katsundo, 6th edition), non-official translation (Introductory Edition Production Systems Engineering, KYORITZ PUBLISHING CO., LTD., NANJO, Mitsuaki)<br><br>田中 宗，量子アニーリング技術の最前線，平成 30 年 電気学会全国大会講演論文集 [DVD-ROM] 平成 30 年電気学会全国大会講演論文集 シンポジウム講演, 05 March 2018, S4(5), S4(6), entire text, all drawings, (TANAKA, Shu, Annual Meeting Record, I.E.E. Japan 2018), non-official translation (Forefront of quantum annealing technology, Annual Meeting Record, I.E.E. Japan 2018 Symposium Lecture) | 1-2, 5-6<br>3-4<br><br><br><br><br>1-6 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 February 2021 | 02 March 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | <br><br>Telephone No. |

Form PCT/ISA/210 (second sheet) (January 2015)

| | International application No. |
|---|---|
| | PCT/JP2020/046427 |

C (Continuation). DOCUMENTS CONSIDERED TO BE RELEVANT

| Category* | Citation of document, with indication, where appropriate, of the relevant passages | Relevant to claim No. |
|---|---|---|
| A | テクノトレンド 次世代の商用車 3 つのコネクテッド機能に注目，日経ビジネス, 05 November 2018, pp. 66-68, entire text, all drawings, non-official translation (Techno trend, Next-generation commercial vehicles focus on three connected features, Nikkei Business) | 1-6 |
| A | JP 2016-95752 A (FUJITSU LIMITED) 26 May 2016 (2016-05-26), entire text, all drawings | 1-6 |

Form PCT/ISA/210 (second sheet) (January 2015)

**INTERNATIONAL SEARCH REPORT**
Information on patent family members

International application No.

PCT/JP2020/046427

```
JP 2016-95752 A    26 May 2016   (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020004599 A

- WO 2018079443 A1

**Non-patent literature cited in the description**

- **YUUICHIROU KAKU.** Optimize Vehicle Routing Problem Simultaneous Delivery and Pick-up to Reduce Logistics Costs. *Information Processing Society of Japan,* 2012